# EUROPÄISCHE PATENTSCHRIFT

(11) **EP 1 041 017 B1**
(45) Veröffentlichungstag und Bekanntmachung des Hinweises auf die Patenterteilung: **12.11.2003**
(21) Anmeldenummer: 00105658.9
(22) Anmeldetag: 17.03.2000
(51) Int. Cl.: B65G 1/137, B65G 1/04

(54) **Einrichtung zum Umschlag und Zwischenpuffern von Transportgut**
Device for transloading and accumulating of transport goods
Dispositif pour transborder et l'accumulation des marchandises de transport

(30) Priorität: 30.03.1999 DE 19914457
(43) Veröffentlichungstag der Anmeldung: 04.10.2000
(73) Patentinhaber: SIEMENS AKTIENGESELLSCHAFT, 80333 München (DE)
(72) Erfinder: Alesi, Peter, Dipl.-Ing. (FH), 90439 Nürnberg (DE); Engelhardt, Alfred, Dipl.-Ing. (FH), 91241 Kirchensittenbach (DE)

(56) Entgegenhaltungen:
- EP-A- 0 678 461
- EP-A- 0 683 116
- US-A- 4 909 697
- US-A- 5 230 206
- US-A- 5 487 635
- H. W. FRONCZAK ET AL: "AUTOMATIC MATERIAL HANDLING SYSTEM" IBM TECHNICAL DISCLOSURE BULLETIN, Bd. 25, Nr. 11B, April 1983 (1983-04), Seiten 6022-6024, XP002141135

## Beschreibung

Die Erfindung bezieht sich auf eine Einrichtung zum Umschlag von Transportgut, wobei über Transportmittel das Transportgut ein- und auslieferbar ist, wobei zur Zwischenpufferung des Transportguts oberhalb einer jeweiligen Transportebene der Transportmittel ein Hochregallager vorgesehen ist, in das über Fördermittel das zwischenzulagernde Transportgut ein- bzw. auslagerbar ist.

Eine derartige Einrichtung ist aus "Materialfluß und Logistik", R. Jünemann, Springer-Verlag 1989, Seite 439 bekannt. Dabei bedienen Flurförderfahrzeuge Güterwaggons, Senkrechtförderer lagern das Transportgut in ein Hochregallager ein und dieses ermöglicht das Ein- und Auslagern auf Lastkraftwagen. Abgesehen davon, daß dieses bekannte Umschlag- und Lagersystem sehr weiträumig ausgebildet ist, wird auch nicht dafür Sorge getragen, daß ein Kommissionieren des Transportgutes in einfacher und kostengünstiger Weise erfolgen kann.

Aufgabe der Erfindung ist es, eine Einrichtung der eingangs genannten Art so auszubilden, daß im Fluß des Transportgutes ein Kommissionieren eingebunden sein kann, das den Betriebsablauf möglichst wenig behindert.

Gemäß der Erfindung wird diese Aufgabe dadurch gelöst, daß oberhalb der einen oder mehreren Transportebenen aber unterhalb des Hochregallagers eine Kommissionierebene vorgesehen ist, in die nicht sofort einzulagerndes, sondern zunächst noch zu kommissionierendes Lagergut mittels des jeweiligen Fördermittels verbringbar ist und daß das kommissionierte Transportgut, vorzugsweise in seinem Weitertransport schwerkraftmäßig unterstützt, unterhalb der Kommissionierebene wieder dem jeweiligen Fördermittel zum Einlagern in das Hochregallager zuführbar ist.

Eine erste vorteilhafte Ausbildung der Erfindung ist dadurch gekennzeichnet, daß als Fördermittel Senkrechtförderer vorgesehen sind, die sich seit langem im harten technischen Einsatz bewährt haben.

Dadurch, daß im Hochregallager das Transportgut für einzelne Aufträge passend zusammenstellbar ist, können beispielsweise Ladungen, die mit einer LKW-Fuhre abzufahren sind, bereits vorausschauend eingelagert werden.

Wenn dieses Zusammenstellen in Lagerkanälen erfolgt, ergibt sich eine besonders übersichtliche Lagerverwaltung.

Dadurch, daß zum Weitertransport des kommissionierten Transportguts eine schräge Rutsche oder Rollenbahn vorgesehen ist, wird der technische Aufwand kleingehalten.

Ein Ausführungsbeispiel der Erfindung ist in der Zeichnung dargestellt und wird im folgenden näher erläutert. Dabei zeigen:
- FIG 1: einen Einlagervorgang und
- FIG 2: einen Auslagervorgang für Transportgut.

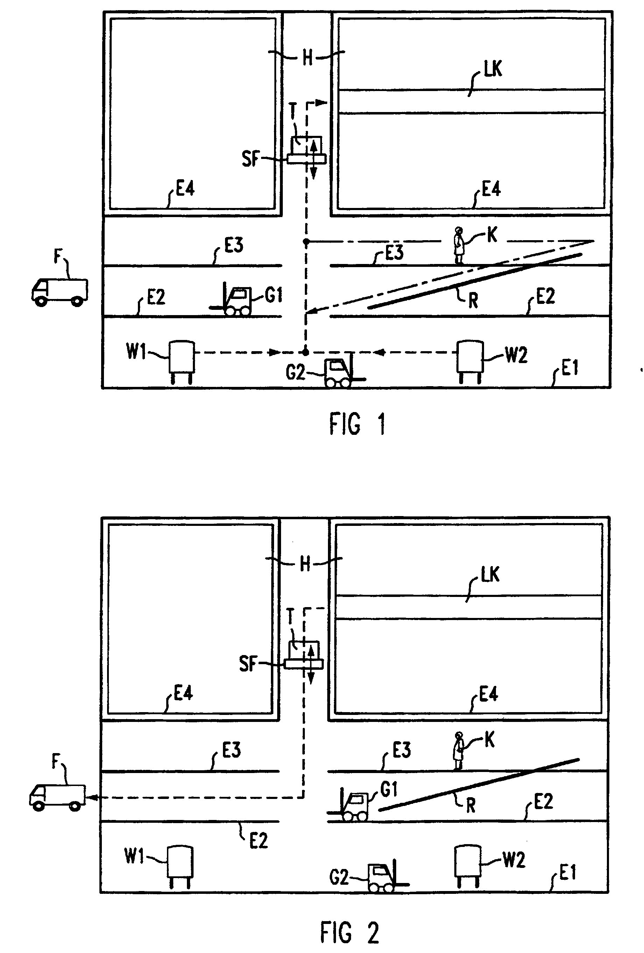

In der Darstellung gemäß FIG 1 ist in Form einer Blockdarstellung gezeigt, daß in einer ersten Ebene E1 Waggons W1 und W2 befindlich sind, aus denen der Übersichtlichkeit halber nicht gezeigtes Transportgut mit Hilfe von Fördermitteln, beispielsweise eines Gabelstaplers G2, in den Bereich eines Senkrechtförderers SF verbringbar ist. Die Richtung des Flusses des Transportgutes ist durchgängig durch die gestrichelte Linien mit Pfeil angedeutet. Der Senkrechtförderer SF kann nun Transportgut so, Transportgut T, in ein Hochregallager H verbringen, das oberhalb einer Ebene E4 befindlich ist. Das Transportgut kann dann in Lagerkanäle LK mit der Übersichtlichkeit halber nicht weiter dargestellten Hilfsmitteln eingebracht werden und in diesen Lagerkanälen LK kann eine Zusammenstellung von zusammengehörigem Transportgut zu Ladungsaufträgen vorgenommen werden. Die bidirektionale Bewegungsrichtung des Senkrechtförderers SF ist in der Darstellung durch einen Doppelpfeil angedeutet. Wenn Transportgut nicht direkt einlagerungsfähig für das Hochregallager H ist, sondern zunächst kommissioniert werden muß, wird der Senkrechtförderer SF in einer Ebene E3 angehalten und das zu kommissionierende Transportgut gelangt in den Arbeitsbereich von Kommissionierern K, denen der Übersichtlichkeit halber ebenfalls nicht dargestellte Kommissioniereinrichtungen zur Verfügung stehen. Das kommissionierte Transportgut wird nach dem Kommissioniervorgang über eine schräg nach unten führende Rutsche oder Rollenbahn R in eine Ebene E2 verbracht und kann dort wieder vom Senkrechtförderer SF aufgenommen werden und das fertig kommissionierte Transportgut kann dann in das Hochregallager H verbracht werden. Die Ebene E2 kann dabei diejenige Ebene sein, die von Gabelstaplern G1 bedient wird, um beispielsweise Fahrzeuge F zu beladen.

In der Darstellung gemäß FIG 2 ist nun gezeigt, wie das Auslagern von eingelagertem Transportgut und Verbringen dieses Transportgutes auf ein Fahrzeug F erfolgt. Aus dem Lagerkanal gelangt das auszulagernde Transportgut, so das Transportgut T, auf den Senkrechtförderer SF und wird von diesem bis in die Ebene E2 verbracht, in der mit Hilfe beispielsweise eines Gabelstaplers G1 das ausgelagerte Transportgut zum Fahrzeug F verbracht wird.

Selbstverständlich kann anstelle eines Aufnehmens von Transportgut aus Waggons und Umschlagen auf Fahrzeuge auch der umgekehrte Transportweg zum Tragen kommen.

## Patentansprüche

1. Einrichtung zum Umschlag von Transportgut, wobei über Transportmittel (W1,W2) das Transportgut ein- und auslieferbar ist, wobei zur Zwischenpufferung des Transportguts oberhalb einer jeweiligen Transportebene (E1) der Transportmittel ein Hochregallager (H) vorgesehen ist, in das über Fördermittel (SF) das zwischenzulagernde Transporgut ein- bzw. auslagerbar ist, **dadurch gekennzeichnet, daß** oberhalb der einen oder mehreren Transportebene (E1,E2) aber unterhalb des Hochregallagers (H) eine Kommissionierebene (E3) vorgesehen ist, in die nicht sofort einzulagerndes, sondern zunächst noch zu kommissionierendes Transportgut mittels des jeweiligen Fördermittels (SF) verbringbar ist und daß das kommissionierte Transportgut, vorzugsweise in seinem Weitertransport schwerkraftmäßig unterstützt, unterhalb der Kommissionierebene wieder dem jeweiligen Fördermittel (SF) zum Einlagern in das Hochregallager (H) zuführbar ist.

2. Einrichtung nach Anspruch 1, **dadurch gekennzeichnet, daß** als Fördermittel Senkrechtförderer (SF) vorgesehen sind.

3. Einrichtung nach einem der vorstehenden Ansprüche, **dadurch gekennzeichnet, daß** im Hochregallager (H) das Transportgut (T) für einzelne aufträge passend zusammenstellbar ist.

4. Einrichtung nach Anspruch 3, **dadurch gekennzeichnet, daß** das Zusammenstellen in Lagerkanälen (LK) erfolgt.

5. Einrichtung nach einem der vorstehenden Ansprüche, **dadurch gekennzeichnet, daß** zum Weitertransport des kommissionierten Transportguts eine schräge Rutsche oder Rollenbahn (R) vorgesehen ist.

## Claims

1. Arrangement for handling transportable articles, it being possible for the articles to be introduced and delivered via transporting means (W1, W2), and a high-bay store (H) being provided for the temporary buffer storage of the articles above a respective transporting plane (E1) of the transporting means, it being possible for the articles which are to be stored temporarily to be stored and retrieved via conveying means (SF), **characterized in that** provided above the one or more transporting planes (E1, E2), but beneath the high-bay store (H), is an order-picking plane (E3) into which articles which, rather than being stored immediately, initially have to be order-picked can be displaced by the respective conveying means (SF), and **in that** the order-picked articles, the further transportation of which is preferably assisted by gravitational force, can be fed, beneath the order-picking plane, back to the respective conveying means (SF) in order to be stored in the high-bay store (H).

2. Arrangement according to Claim 1, **characterized in that** vertical conveyors (SF) are provided as conveying means.

3. Arrangement according to one of the preceding claims, **characterized in that** the articles (T) for individual orders can be put together appropriately in the high-bay store (H).

4. Arrangement according to Claim 3, **characterized in that** the articles are put together in storage channels (LK).

5. Arrangement according to one of the preceding claims, **characterized in that** a sloping chute or roller conveyor (R) is provided in order to transport the order-picked articles further.

## Revendications

1. Installation pour transborder des marchandises à transporter, les marchandises à transporter pouvant être remises et retirées à l'aide de moyens de transport (W1, W2), un entrepôt à rayonnages (H) dans lequel la marchandise à transporter à stocker temporairement peut être remise et retirée à l'aide de moyens de convoyage (SF) étant prévu pour stocker temporairement la marchandise à transporter au-dessus d'un niveau de transport (E1) respectif des moyens de transport,
**caractérisée en ce que**, au-dessus du ou de plusieurs niveaux de transport (E1, E2) mais au-dessous de l'entrepôt à rayonnages (H), on prévoit un niveau de préparation d'expédition (E3) dans lequel une marchandise à transporter qu'on ne doit pas stocker aussitôt mais qu'on doit d'abord encore préparer pour l'expédition peut être apportée à l'aide du moyen de convoyage (SF) concerné et que la marchandise à transporter préparée pour l'expédition peut être de nouveau conduite, de préférence sous l'effet de la force de gravité dans la suite de son transport, au-dessous du niveau d'expédition jusqu'au moyen de convoyage (SF) concerné pour la stocker dans l'entrepôt à rayonnages (H).

2. Installation selon la revendication 1, **caractérisée en ce que** l'on prévoit des convoyeurs verticaux (SF) en tant que moyens de convoyage.

3. Installation selon l'une des revendications précédentes, **caractérisée en ce que** dans l'entrepôt à rayonnages (H) la marchandise à transporter (T) peut être regroupée de façon adaptée à des commandes particulières.

4. Installation selon la revendication 3, **caractérisée en ce que** le regroupement est réalisé dans des canaux d'entreposage (LK).

5. Installation selon l'une des revendications précédentes, **caractérisée en ce que** l'on prévoit une glissière inclinée ou un transporteur à rouleaux (R) pour continuer de transporter la marchandise à transporter préparée pour l'expédition.
